# EUROPEAN PATENT SPECIFICATION

(11) **EP 0 410 744 B1**
(45) Date of publication and mention of the grant of the patent: **19.11.1997**
(21) Application number: 90308190.9
(22) Date of filing: 26.07.1990
(51) Int. Cl.: G06T 11/40

(54) **Graphics processor trapezoidal fill instruction method and apparatus**
Verfahren und Vorrichtung für einen Grafikprozessorbefehl zur trapezförmigen Ausfüllung
Méthode et dispositif pour une instruction de remplissage de trapèze dans un processeur graphique

(30) Priority: 28.07.1989 US 387242
(43) Date of publication of application: 30.01.1991
(73) Proprietor: TEXAS INSTRUMENTS INCORPORATED, Dallas Texas 75265 (US)
(72) Inventor: Asal, Michael D., Sugar Land, Texas 77478 (US); Guttag, Karl M., Missouri City, Texas 77459 (US); Van Aken, Jerry R., Sugar Land, Texas 77479 (US)
(74) Representative: Blanco White, Henry Nicholas

(56) References cited:
- EP-A- 0 218 984
- EP-A- 0 240 246
- WO-A-87/00660
- PATENT ABSTRACTS OF JAPAN vol. 13, no. 162 (P-859) 19 April 1989, & JP-A-63 318686 (MATSUSHITA ELECTRIC IND. CO. LTD.) 27 December 1988,
- PATENT ABSTRACTS OF JAPAN vol. 13, no. 35 (P-818) 26 January 1989, & JP-A-63 231584 (FUJITSU LTD) 27 September 1988,

## Description

### TECHNICAL FIELD OF THE INVENTION

This invention relates to a graphics processor, and more particularly to a graphics processor system and method having specialized graphic fill instructions separately coded for utilization in an economical manner.

### BACKGROUND OF THE INVENTION

The increase in computer literacy has brought with it a great need for the use and generation of computer graphics. These graphics are for use both on a display screen and on a printed medium. As computer power increases, so does the complexity of the graphics thereby spawning a desire for creating efficient graphics delivery systems. This, in turn, implies the need for storing and recreating the graphics in a very economical manner, both in terms of time and in terms of memory space.

One of the basic building blocks of computer graphics resides in the use of a series of trapezoidal building blocks to create complex characters and shapes. A problem occurs, however, when it is desired to fill the area between the trapezoidal boundaries created by the computer processor. Because memory capacity, as well as processing capacity, is limited, a premium is placed on the ability to create these trapezoidal fills in a very efficient manner. Compounding the problem is the fact that when visual or screen graphics are involved, typically, a viewer is aware of any change in the graphics, or in any time delay creating the image. System delays then severely impact upon the user's perception of the graphic display.

In the prior art, there are many ways of building the trapezoid. Primarily, these methods rely upon the use of assembly language which provides a step-by-step set of instructions for fetching and creating the graphic display. In a typical prior art system, the processor would provide a start point and an end point, and the assembly language instructions would then create the fill between these points. This fill would occur through a continuous set of calculations which the instructions would control, one line at a time, until the trapezoid was filled. This step by step is memory intensive as well as processor intensive. In addition, because so many calculations are taking place, data is constantly moving back and forth along the system bus.

A further problem exists in that binary registers which store slope values typically have the increment 1 as the smallest value. Thus, a slope of 1 and a pixel distance of 1 between rows creates slopes of 45 degrees or more, which produce only a limited number of trapazoids. This is an intolerable situation.

Thus, there is needed in the art an arrangement for creating the trapezoid fill in a memory-efficient and processor-efficient manner so as to increase the processor graphics handling capability.

There is also a need in the art for such a system which can create trapezoids having sides with small slopes.

### SUMMARY OF THE INVENTION

The trapezoidal fill is a fundamental requirement of most graphics processing systems. By building a specific microcoded processor to perform this function, system efficiency is greatly enhanced. The microcoded processor is designed to accept a single instruction which will, given two end points, fill between the end points. The system will perform the step down calculations to the next line without communicating line-by-line results to the main graphics processor.

Basically, the instruction calculates one line of the trapezoid at a time, with the proper variables being set up for use by that instruction. In its simplest form, the trapezoid fill is perfected by a few instructions running in a loop.

The user provides the start point and the end point in a given pixel row of one parallel side of the trapezoid. The user also provides the slopes between those end points and the start and end points of the next pixel row. These two slopes are stored in registers to be used by the TFI11 instruction. The registers are devised so that they contain decimal information, thereby allowing for small slope values. The TFI11 instruction copies a preestablished color value to all pixels located between the start and end pixels in the given pixel row. The instruction then increments the pixel row based upon the stored slopes. When a fractional part is stored for an end point, the value of the end point is not changed until the integer portion, not the fractional portion, of the stored value is indexed.

it is a technical advantage to have a specially designed graphic generation circuit capable of accepting specific begin and end points and, based upon these points and the desired graphic shape, generate, independent from the main graphic processor, the complete graphic picture.

JP-A Sho 63-318686 discloses a trapezoid filling method in which the initial and final points of an oblique edge of the trapezoid are input, and points on each pixel row at the edge are calculated. if the edge is at less than 45° to the direction of the rows, two points are generated for the same end of each row, and the outer one is selected.

The invention provides a method of generating a graphic representation of a trapezoid in a graphic processing system, as set out in claim 1.

The invention also provides a processor for use in a graphics processing system, as set out in claim 7.

### BRIEF DESCRIPTION OF THE DRAWINGS

For a more complete understanding of the present invention and for further advantages thereof, reference is now made to the following Detailed Description, taken in conjunction with the accompanying Drawings, in which:
FIGURE 1 shows a typical graphic processing system;
FIGURE 2 shows the schematic version of a graphics processor, which can be used in conjunction with this invention;
FIGURES 3 and 4 show the line-by-line generation of the trapezoid fill; and
FIGURE 5 shows a typical algorithm program to control this operation in a graphics processor.

### DETAILED DESCRIPTION OF THE INVENTION

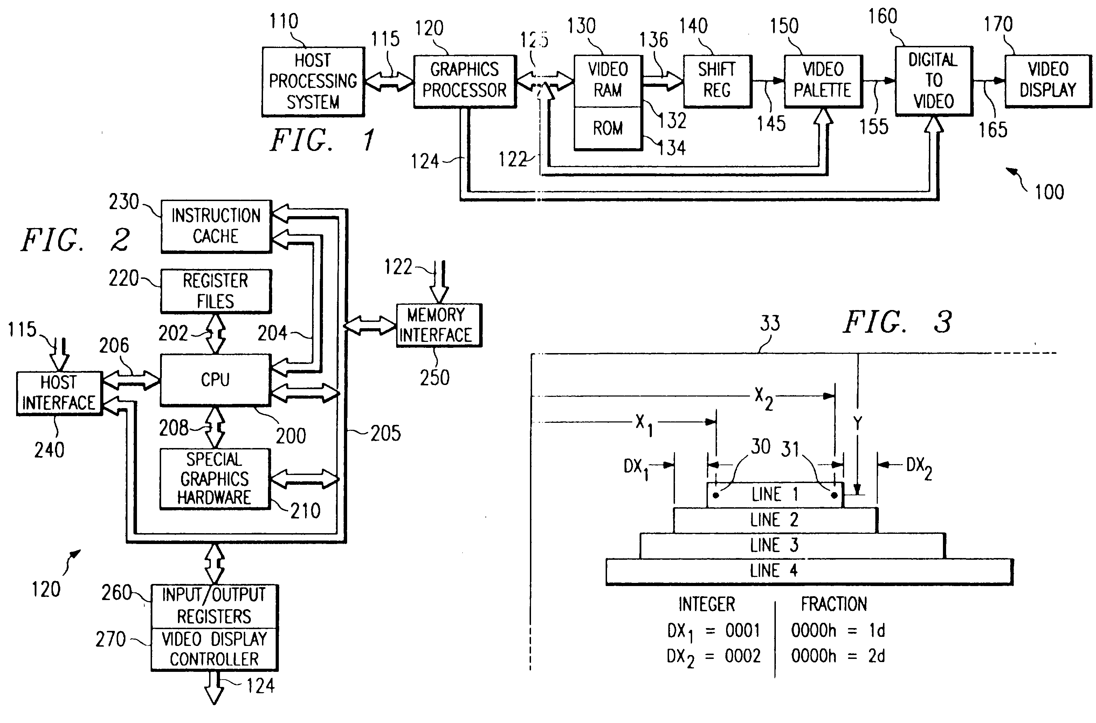

Before moving into the detailed discussion of the invention, it is helpful to briefly review, with respect to FIGURES 1 and 2, the basic operation of a graphics processor operating in conjunction with a host system. Such a graphics processor is described Texas Instruments Inc. User's Guides TMS 34010 and 34020 and Specification TMS 34020/TMS 34082, both of which documents are currently available to the general public from Texas Instruments Inc., P.O. Box 1443, Houston, Tx. 77551-1443.

For convenience and ease of understanding the inventive concepts taught herein, there has been no attempt to show each and every operation and data movement, since the actual embodiment of the invention in a system will, to a large degree, depend upon the actual system operation in which the inventive concept is embodied. The mathematical calculations which are required to be performed to achieve the results of the inventive concept can be performed by the floating point coprocessor described in concurrently filed copending patent application entitled "Graphics Processor Having A Floating Point Coprocessor", European Application EP-A-410778 which operates in conjunction with a graphics processor of the type referenced herein or can operate as a stand-alone processor.

FIGURE 1 illustrates a block diagram of graphics computer system 100 which is constructed in accordance with the principles of the present invention. Graphics computer system 100 includes host processing system 110, graphics processor 120, memory 130, shift register 140, video palette 150, digital to video converter 160, and video display 170. This is a typical application for the invention which can be used with any number of systems.

Host processing system 110 provides the major computational capacity for the graphics computer system 100. Host processing system 110 preferably includes at least one microprocessor, read only memory, random access memory and assorted peripheral devices for forming a complete computer system. Host processing system 110 preferably also includes some form of input device, such as a keyboard or a mouse, and some form of long term storage device such as a disk drive. The details of the construction of host processing system 110 are conventional in nature and known in the art; therefore, the present application will not further detail this element. The essential feature of host processing system 110, as far as the present invention is concerned, is that host processing system 110 determines the content of the visual display to be presented to the user.

Graphics processor 120 provides the major data manipulation in accordance with the present invention to generate the particular video display presented to the user. Graphics processor 120 is bidirectionally coupled to host processing system 110 via host bus 115. In accordance with the present invention, graphics processor 120 operates as an independent data processor from host processing system 110. However, it is expected that graphics processor 120 is responsive to requests from host processing system 110 via host bus 115. Graphics processor 120 further communicates with memory 130, and video palette 150 via video memory bus 122. Graphics processor 120 controls the data stored within video RAM 132 via video memory bus 122. In addition, graphics processor 120 may be controlled by programs stored in either video RAM 132 or read only memory 134. Read only memory 134 may additionally include various types of graphic image data, such as alphanumeric characters in one or more font styles and frequently used icons. In addition, graphics processor 120 controls the data stored within video palette 150. This feature will be further disclosed below. Lastly, graphics processor 120 controls digital to video converter 160 via video control bus 124. Graphics processor 120 may control the line length and the number of lines per frame of the video image presented to the user by control of digital to video converter 160 via video control bus 124.

Video memory 130 includes video RAM 132 which is bidirectionally coupled to graphics processor 120 via video memory bus 122 and read only memory 134. As previously stated, video RAM 134 includes the bit mapped graphics data which controls the video image presented to the user. This video data may be manipulated by graphics processor 120 via video memory bus 122. In addition, the video data corresponding to the current display screen is output from video 132 via video output bus 136. The data from video output bus 136 corresponds to the picture element to be presented to the user. In the preferred embodiment, video RAM 132 is formed of a plurality of TMS44251 256KX4 dynamic random access integrated circuits (VRAMS) available from Texas Instruments Inc., the assignee of the present application. The TMS44251 integrated circuit includes dual ports, enabling display refresh and display update to occur without interference.

Shift register 140 receives the video data from video RAM 132 and assembles it into a display bit stream. In accordance with the typical arrangement of video random access memory 132, this memory consists of a bank of several separate random access memory integrated circuits. The output of each of these integrated circuits is typically only one or four bits wide. Therefore, it is necessary to assemble data from a plurality of these circuits in order to obtain a sufficiently high data output rate to specify the image to be presented to the user. Shift register 140 is loaded in parallel from video output bus 136. This data is output in series on line 145. Thus, shift register 140 assembles a display bit stream which provides video data at a rate high enough to specify the individual dots within the raster scanned video display.

Video palette 150 receives the high speed video data from shift register 140 via bus 145. Video palette 150 also receives data from graphics processor 120 via video memory bus 122. Video palette 150 converts the data received on bus 145 into a video level output on bus 155. This conversion is achieved by means of a look-up table which is specified by graphics processor 120 via video memory bus 122. The output of video palette 150 may comprise color hue and saturation for each picture element or may comprise red, green and blue primary color levels for each pixel. The table of conversion from the code stored within video memory 132 and the digital levels output via bus 155 is controlled from graphics processor 120 via video memory bus 122.

Digital to video converter 160 receives the digital video information from video palette 150 via bus 155. Digital to video converter 160 is controlled by graphics processor 120 via video control bus 124. Digital to video converter 160 serves to convert the digital output of video palette 150 into the desired analog levels for application to video display 170 via video output 165. Digital to video converter 160 is controlled for a specification of the number of pixels per horizontal line and the number of lines per frame, for example, by graphics processor 120 via video controller bus 124. Data within graphics processor 120 controls the generation of the synchronization and blanking signals and the retrace signals by digital to video converter 160. These portions of the video signal are not specified by the data stored within video memory 132, but rather form the control signals necessary for specification of the desired video output.

Lastly, video display 170 receives the video output from digital to video converter 160 via video output line 165. Video display 170 generates the specified video image for viewing by the operator of graphics computer system 100. It should be noted that video palette 150, digital to video converter 160 and video display 170 may operate in accordance to two major video techniques. In the first, the video data is specified in terms of color hue and saturation for each individual pixel. In the other technique, the individual primary color levels of red, blue and green are specified for each individual pixel. Upon determination of the design choice of which of these major techniques to be employed, video palette 150, digital to converter 160 and video display 170 must be constructed to be compatible to this technique. However, the principles of the present invention in regard to the operation of graphics processor 120 are unchanged regardless of the particular design choice of video technique.

FIGURE 2 illustrates graphics processor 120 in further detail. Graphics processor 120 includes central processing unit 200, special graphics hardware 210, register files 220, instruction cache 230, host interface 240, memory interface 250, input/output registers 260 and video display controller 270.

The heart of graphics processor 120 is central processing unit 200. Central processing unit 200 includes the capacity to do general purpose data processing including a number of arithmetic and logic operations normally included in a general purpose central processing unit. In addition, central processing unit 200 controls a number of special purpose graphics instructions, either alone or in conjunction with special graphics hardware 210.

Graphics processor 120 includes a major bus 205 which is connected to most parts of graphics processor 120 including the central processing unit 200. Central processing unit 200 is bidirectionally coupled to a set of register files, including a number of data registers, via bidirectional register bus 202. Register files 220 serve as the depository of the immediately accessible data used by central processing unit 200. As will be further detailed below, register files 220 include, in addition to general purpose registers which may be employed by central processing unit 200, a number of data registers which are employed to store implied operands for graphics instructions.

Central processing unit 200 is connected to instruction cache 230 via instruction cache bus 204. Instruction cache 230 is further coupled to bus 205 and may be loaded with instruction words from video memory 132 (FIGURE 1) via video memory bus 122 and memory interface 250. The purpose of instruction cache 230 is to speed up the execution of certain functions of central processing unit 200. A repetitive function or function that is used often within a particular portion of the program executed by central processing unit 200 may be stored within instruction cache 230. Access to instruction cache 230 via instruction cache bus 204 is much faster than access to video memory 130. Thus, the program executed by central processing unit 200 may be speeded up by preliminarily loading the repeated or often used sequences of instructions within instruction cache 230. Then these instructions may be executed more rapidly because they may be fetched more rapidly. Instruction cache 230 need not always contain the same sets of instructions, but may be loaded with a particular set of instructions which will be often used within a particular portion of the program executed by central processing unit 200.

Host interface 240 is coupled to central processing unit 200 via host interface bus 206. Host interface 240 is further connected to host processing system 110 (FIGURE 1) via host system bus 115. Host interface 240 serves to control the communication between host processing system 110 and graphics processor 120. Host interface 240 controls the timing of data transfer between host processing system 110 and graphics processor 120. In this regard, host interface 240 enables either host processing system 110 to interrupt graphics processor 120 or vice versa enabling graphics processor 120 to interrupt host processing system 110. In addition, host interface 240 is coupled to major bus 205 enabling host processing system 110 to control directly the data stored within memory 130. Typically, host interface 240 would communicate graphics requests from host processing system 110 to graphics processor 120, enabling the host system to specify the type of display to be generated by video display 170 and causing graphic processor 120 to perform a desired graphic function.

Central processing unit 200 is coupled to special graphics hardware 210 via graphics hardware bus 208. Special graphics hardware 210 is further connected to major bus 205. Special graphics hardware 210 operates in conjunction with central processing unit 200 to perform special graphic processing operations. Central processing unit 200, in addition to its function of providing general purpose data processing, controls the application of the special graphics hardware 210 in order to perform special purpose graphics instructions. These special purpose graphics instructions concern the manipulation of data within the bit mapped portion of video RAM 132. Special graphic hardware 210 operates under the control of central processing unit 200 to enable particular advantageous data manipulations regarding the data within video RAM 132.

Memory interface 250 is coupled to bus 205 and further coupled to video memory bus 122. Memory interface 250 serves to control the communication of data and instructions between graphics processor 120 and memory 130. Memory 130 includes both the bit mapped data to be displayed via video display 170 and instructions and data necessary for the control of the operation of graphics processor 120. These functions include control of the timing of memory access, and control of data and memory multiplexing. In the preferred embodiment, video memory bus 122 includes multiplexed address and data information. Memory interface 250 enables graphics processor 120 to provide the proper output on video memory bus 122 at the appropriate time for access to memory 130.

Graphics processor 120 lastly includes input/output registers 260 and video display controller 270. Input/output registers 260 are bidirectionally coupled to bus 205 to enable reading and writing within these registers. Input/output registers 260 are preferably within the ordinary memory space of central processing unit 200. Input/output registers 260 include data which specifies the control parameters of video display controller 270. In accordance with the data stored within input/out registers 260, video display controller 270 generates the signals on video control bus 124 for the desired control of digital to video converter 160. Data within input/output registers 260 includes data for specifying the number of pixels per horizontal line, the horizontal synchronization and blanking intervals, the number of horizontal lines per frame and the vertical synchronization and blanking intervals. Input/output registers 260 may also include data which specifies the type of frame interlace and specifies other types of video control functions. Lastly, input/output registers 260 is a depository for other specific kinds of input and output parameters which will be more fully detailed below.

Graphics processor 120 operates in two differing address modes to address memory 130. These two address modes are x-y addressing and linear addressing. Because the graphics processor 120 operates on both bit mapped graphic data and upon conventional data and instructions, different portions of the memory 130 may be accessed most conveniently via differing addressing modes. Regardless of the particular addressing mode selected, memory interface 250 generates the proper physical address for the appropriate data to be accessed. In liner addressing, the start address of a field is formed of a single multibit linear address. The field size is determined by data within a status register within central processing unit 200. In X-Y addressing the start address is a pair of X and Y coordinate values. The field size is equal to the size of a pixel, that is the number of bits required to specify the particular data at a particular pixel.

Turning now to FIGURE 3, there is shown a portion of a screen 33, which can be any video screen having pixels for controlling the display at a point. This display need not be video. It could be a print-out by laser or otherwise. The purpose of the invention is to create within a set of lines a fill instruction which will fill the points to create a trapezoid. In this discussion, a trapezoid is defined as two parallel lines and two sloping lines intersecting the parallel lines. The user provides the pixel address Xl of point 30, which is the starting point of the trapezoid. This address can be provided in a row-and-column format or in a vector format.

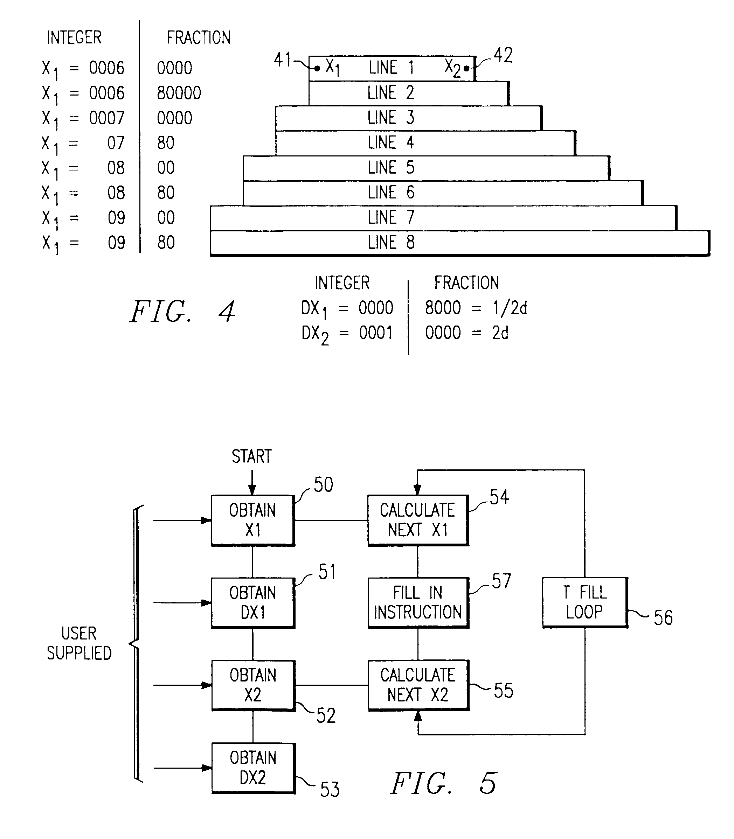

Once the user provides the X1 address of pixel 30, the user then defines the change between that address and the first pixel in the next row. In this case, that would be DX1, shown in FIGURE 3 for line 2. The user then defines the end of the line at point 31, which is X2 and also defines the slope DX2, which is the end of line 2. Note that the slopes DX1 and DX2 can be different values. Therefore, the slope of the line on one side of the trapezoid need not be the same as the slope of the line on the other side of the trapezoid. Once these values are defined, then the system is arranged to work in a loop to continue calculating the points line-by-line until the loop is complete. This loop can be shown in FIGURE 5, where box 50 obtains X1 value; box 51 obtains the delta or DX1 value; box 52 obtains the X2 value; box 53 obtains the DX2 value; box 54 calculates the next X1 for the lefthandmost pixel of the next line; box 55 calculates the next X2 for the rightmost pixel; box 57 issues the instruction to the processor to fill in the pixels between these two points, and T-fill loop 56 operates to continue the recalculation of each new point, line-by-line until the trapezoid is complete. The number of times the process is looped determines the ultimate size of the trapezoid, i.e., the bottom line. This value can be provided to a register by an instruction or could be part of the initial instruction.

Note that from FIGURE 3, using this arrangement, the pixels from line 1 to line 2 can only move a value of 1. Thus, if DX1 is 1, the slope will be 45°. However, by storing the DX1 and DX2 values in a register having a decimal point therein, fractions of the slope can be maintained. Accordingly, when a calculation is performed, such as shown in FIGURE 4, where the next line does not increment until an entire integer changes, then the same pixel is activated. This can be seen clearly for lines 1 and 2 where pixel 40 maintains the same position for line 1 while moving one pixel to the left for lines 3 and 4 and then one more pixel to the left for lines 5 and 6 and still one more pixel to the left for lines 7 and 8. Of course, the actual shape is dependent upon the calculated slope characteristics, but using this multi-bit register and maintaining a fractional point within the register will allow for very precise curves when necessary.

One system for controlling this operation is shown in FIGURE 5 which is under microcoded control where the start point X1 for the top of the trapezoid is shown being accepted by box 50. This could be a register or memory position or any other method of preserving data. The slope, which is the change from the start point stored in box 50 to a new line starting point (X dimension) of a next adjacent line to be calculated, is stored in box 51. The slope can be positive or negative and is independent of the slope of the line end points.

Likewise, the end point of the first line, along the same Y valued coordinate, is accepted in box 52, as is its slope in box 53.

These two points, the start point and the end point, are then retained for communication to the processor, or to video memory, to begin the definition of the trapezoid. The value of the next line start point is calculated in box 54 based on the slope value and the value of the current line start point. Also calculated is the value of the next adjacent line end point, again based on the slope and the value of the current line end point. The Y address value increments by one for each line, and thus height of the trapezoid is controlled by loop control, box 56, which can be a counter or other system for controlling iterations in a coded loop.

The value of the line start and end points is maintained in a register in such a fashion that both the integer value and any decimal portions are preserved. Thus, since the pixel address in the X direction can only change by a whole number (there being no half-pixel locations), it is sometimes necessary to avoid incrementing the X value to achieve certain slopes. This is accomplished by only allowing the X value to change when the integer portion of the stored value of the new line has changed for either the start point or the end point of the line, as discussed above.

Using this arrangement then, there is achieved a microcoded program and circuitry in support thereof for allowing a trapezoid to be generated with a minimum of intrusion by the processor and such that a loop of the program controls the size of the resulting graphic.

The generation of address information takes into account the pitch between pixels and pixel size in terms of data bits.

It should be noted that many of the operations discussed herein, included the mathematical calculations, can be performed by a coprocessor such as is the subject matter of concurrently filed, copending application EP-A-410 778 entitled "Graphics Processor Having a Floating Point Coprocessor".

While the system has been described in terms of rows and columns, it is understood that these can be rotated and also be eliminated. The inventive concept will work for any type of system.

## Claims

1. A method of generating a graphic representation of a trapezoid in a graphic processing system, said method comprising the steps of:
(a) storing (50) start point address data (X₁) to represent location of a start point of one of the parallel sides of the trapezoid, said start point address data including an associated integer part and a fractional part;
(b) storing (52) end point address data (X₂) to represent location of an end point of said one parallel side of the trapezoid, said end point address including an associated integer part and a fractional part;
(c) storing (51) start point slope data (DX₁) representing the distance, in a direction parallel to said parallel sides, from said start point to a start point in an adjacent pixel row of the trapezoid, said start point slope data including an associated integer part and a fractional part;
(d) storing (53) end point slope data (DX₂) representing the distance, in a direction parallel to said parallel sides, from said end point to an end point in said adjacent pixel row of the trapezoid, said end point slope data including an associated integer part and a fractional part;
(e) generating (57) in the graphics processing system an instruction which creates a pixel value for pixel locations between said start point and said end point;
(f) using said pixel value to fill pixels between said start point and end point;
(g) determining (54) a start point for a next pixel row under control of said generated instruction, the start point address data of the previous pixel row, and said start point slope data (DX₁);
(h) determining (55) an end point for said next pixel row under control of said generated instruction, the end point address data of the previous pixel row, and said end point slope data (DX₂);
(i) using said pixel value to fill pixels between the start and end points of said next pixel row; and
(j) repeating (56) steps (g) through (i) until generation of the trapezoid is completed.

2. A method as set forth in Claim 1 wherein said start point and said end point are located in a pixel row defined by a value Y.

3. A method as set forth in Claim 2 wherein step (g) includes the step of changing by 1 said value of Y, and wherein step (j) further includes the step of repeating steps (g) through (i) in accordance with a given loop value until generation of the trapezoid is completed.

4. The method as set forth in Claim 3 wherein step (g) further includes the step of controlling said loop value using said instruction.

5. A method as set forth in any one of Claims 1 to 4, wherein step (g) of determining the start point includes the step of incrementing the position of the start point for said next pixel row in a direction parallel to said parallel side of said trapezoid only when said integer part of said start point address data changes.

6. A method as set forth in any one of Claims 1 to 5, wherein step (h) of determining the end point includes the step of incrementing the position of the end point for said next pixel row in a direction parallel to said parallel side of said trapezoid only when said integer part of said end point address data changes.

7. A processor for use in a graphics processing system, comprising:
a plurality of registers;
a memory containing coded instructions for controlling the steps of said processor, said coded instructions operable for moving data in and out of said registers during the performance of any of said coded instructions; and
circuitry operable in response to the institution of a particular set of said coded instructions upon receipt of a single instruction for performing trapezoid fill calculations where certain intermediate results are stored in said registers and not communicated to said processor, said circuitry further including:
a first register for storing an address (X₁) of a start point (30,41) of one of the parallel sides of said trapezoid in a format which includes an integer and a fractional part;
a second register for storing an address (X₂) of an end point (31,42) of said parallel side in a format which includes an integer and a fractional part;
slope registers for storing first slope data (DX₁) representing the distance, in a direction parallel to said parallel sides, from said start point to a start point in an adjacent pixel row and second slope data (DX₂) representing the distance, in a direction parallel to said parallel sides, from said end point to an end point in said adjacent pixel row, said first and second slope data stored in a format which includes an integer and a fractional part;
circuitry (54,55) for successively calculating each next start point and each next end point for each next pixel row of said trapezoid based upon said first slope data and said second slope data in said slope registers and upon successively updated data in said first register and said second register; and
circuitry for presenting said each next start point and said each next end point to said processor so as to create and fill said trapezoid.

8. A processor as set forth in Claim 7, comprising loop control circuitry, said loop control circuitry including a counter, and wherein said calculating circuitry is controlled by said loop control circuitry.

9. A processor as set forth in Claim 7 or claim 8, wherein said calculating circuitry increments the position, in a direction parallel to said parallel side, of each said next start or end point only when the integer part of the respective next start or end point changes.

10. A processor set forth in any one of Claims 7 to 9, comprising circuitry for creating a pixel value for pixel locations between said start point and said end point of each pixel row in the trapezoid.

## Patentansprüche

1. Verfahren zum Erzeugen einer graphischen Darstellung eines Trapezes in einem Graphikverarbeitungssystem, wobei das Verfahren die folgenden Schritte enthält:
(a) Speichern (50) von Startpunkt-Adressendaten (X₁), um die Stelle eines Startpunkts einer der parallelen Seiten des Trapezes darzustellen, wobei die Startpunkt-Adressendaten einen zugeordneten Ganzzahlteil und einen Bruchzahlteil enthalten;
(b) Speichern (52) von Endpunkt-Adressendaten (X₂), um eine Stelle eines Endpunkts der einen parallelen Seite des Trapezes darzustellen, wobei die Endpunkt-Adressendaten einen zugeordneten Ganzzahlteil und einen zugeordneten Bruchzahlteil enthalten;
(c) Speichern (51) von Startpunkt-Neigungsdaten (DX₁), die die Strecke in einer Richtung parallel zu den parallelen Seiten von dem Startpunkt zu einem Startpunkt in einer angrenzenden Pixelzeile des Trapezes darstellen, wobei die Startpunkt-Neigungsdaten einen zugeordneten Ganzzahlteil und einen zugeordneten Bruchzahlteil enthalten;
(d) Speichern (53) von Endpunkt-Neigungsdaten (DX₂), die die Strecke in einer Richtung parallel zu den parallelen Seiten von dem Endpunkt zu einem Endpunkt in der angrenzenden Pixelzeile des Trapezes darstellen, wobei die Endpunkt-Neigungsdaten einen zugeordneten Ganzzahlteil und einen Bruchzahlteil enthalten;
(e) Erzeugen (57) eines Befehls im Graphikverarbeitungssystem, der einen Pixelwert für Pixelstellen zwischen dem Startpunkt und dem Endpunkt erzeugt;
(f) Verwenden des Pixelwerts, um Pixel zwischen dem Startpunkt und dem Endpunkt aufzufüllen;
(g) Bestimmen (54) eines Startpunkts für eine nächste Pixelzeile unter der Steuerung des erzeugten Befehls, der Startpunkt-Adressendaten der vorhergehenden Pixelzeile und der Startpunkt-Neigungsdaten (DX₁);
(h) Bestimmen (55) eines Endpunkts für die nächste Pixelzeile unter der Steuerung des erzeugten Befehls, der Endpunkt-Adressendaten der vorhergehenden Pixelzeile und der Endpunkt-Neigungsdaten (DX₂);
(i) Verwenden des Pixelwerts, um Pixel zwischen dem Startpunkt und dem Endpunkt der nächsten Pixelzeile aufzufüllen; und
(j) Wiederholen (56) der Schritte (g) bis (i), bis die Erzeugung des Trapezes abgeschlossen ist.

2. Verfahren nach Anspruch 1, in dem der Startpunkt und der Endpunkt sich an einer Pixelzeile befinden, die durch einen Wert Y definiert ist.

3. Verfahren nach Anspruch 2, in dem der Schritt (g) den Schritt des Änderns um 1 des Wertes von Y enthält und in dem der Schritt (j) ferner den Schritt des Wiederholens der Schritte (g) bis (i) entsprechend einem gegebenen Schleifenwert bis zum Abschluß der Erzeugung des Trapezes enthält.

4. Verfahren nach Anspruch 3, in dem der Schritt (g) ferner den Schritt des Steuerns des Schleifenwerts unter Verwendung des Befehls enthält.

5. Verfahren nach irgendeinem der Ansprüche 1 bis 4, in dem der Schritt (g) des Bestimmens des Startpunkts den Schritt des Inkrementierens der Position des nächsten Startpunkts für die nächste Pixelzeile in einer Richtung parallel zu der parallelen Seite des Trapezes nur dann, wenn sich der Ganzzahlteil der Startpunkt-Adressendaten ändert, enthält.

6. Verfahren nach irgendeinem der Ansprüche 1 bis 5, in dem der Schritt (h) des Bestimmens des Endpunkts den Schritt des Inkrementierens der Position des Endpunkts für die nächste Pixelzeile in einer Richtung parallel zur parallelen Seite des Trapezes nur dann, wenn sich der Ganzzahlteil der Endpunkt-Adressendaten ändert, enthält.

7. Verfahren für die Verwendung in einem Graphikverarbeitungssystem, mit:
mehreren Registern;
einem Speicher, der codierte Befehle für die Steuerung der Schritte des Prozessors enthält, wobei die codierten Befehle in der Weise operieren können, daß sie Daten während der Ausführung irgendeines der codierten Befehle in die Register und aus den Registern bewegen können; und
einer Schaltungsanordnung, die als Antwort auf die Einsetzung eines besonderen Satzes der codierten Befehle bei Empfang eines einzelnen Befehls für die Ausführung der Trapezauffüllberechnungen operieren kann, wobei bestimmte Zwischenergebnisse in den Registern gespeichert werden und nicht mit dem Prozessor ausgetauscht werden, wobei die Schaltungsanordnung ferner enthält:
ein erstes Register zum Speichern einer Adresse (X₁) eines Startpunkts (30, 41) einer der parallelen Seiten des Trapezes in einem Format, das einen Ganzzahl- und einen Bruchzahlteil enthält;
ein zweites Register zum Speichern einer Adresse (X₂) eines Endpunkts (31, 42) der parallelen Seite in einem Format, das einen Ganzzahl- und einen Bruchzahlteil enthält;
Neigungsregister zum Speichern von ersten Neigungsdaten (DX₁), die die Strecke in einer Richtung parallel zu den parallelen Seiten vom Startpunkt zu einem nächsten Startpunkt in einer angrenzenden Pixelzeile darstellen, sowie von zweiten Neigungsdaten (DX₂), die die Strecke in einer Richtung parallel zu den beiden Seiten von dem Endpunkt zu einem angrenzenden Endpunkt in der angrenzenden Pixelzeile darstellen, wobei die ersten und zweiten Neigungsdaten in einem Format gespeichert sind, das einen Ganzzahl- und einen Bruchzahlteil enthält;
eine Schaltungsanordnung (54, 55), die sukzessive jeden nächsten Startpunkt und jeden nächsten Endpunkt für jede angrenzende Pixelzeile des Trapezes auf der Grundlage der ersten Neigungsdaten und der zweiten Neigungs-daten in den Neigungsregistern und bei sukzessive aktua-lisierten Daten im ersten Register und im zweiten Register berechnet; und
eine Schaltungsanordnung, die jeden nächsten Startpunkt und jeden nächsten Endpunkt für den Prozessor bereitstellt, um so das Trapez zu erzeugen und aufzufüllen.

8. Prozessor nach Anspruch 7, der eine Schleifensteuerungsschaltungsanordnung enthält, wobei die Schleifensteuerungsschaltungsanordnung einen Zähler enthält, wobei die Berechnungsschaltungsanordnung durch die Schleifensteuerungsschaltungsanordnung gesteuert wird.

9. Prozessor nach Anspruch 7 oder Anspruch 8, in dem die Berechnungsschaltungsanordnung die Position jedes nächsten Start- oder Endpunkts in einer Richtung parallel zu der parallelen Seite nur dann inkrementiert, wenn sich der Ganzzahlteil des entsprechenden nächsten Start- oder Endpunkts ändert.

10. Prozessor nach irgendeinem der Ansprüche 7 bis 9, mit einer Schaltungsanordnung zum Erzeugen eines Pixelwerts für Pixelstellen zwischen dem Startpunkt und dem Endpunkt jeder Pixelzeile in dem Trapez.

## Revendications

1. Procédé pour engendrer une représentation graphique d'un trapèze dans un système de traitement graphique, ledit procédé comprenant les étapes consistant à:
a) stocker (50) des données d'adresse de point de départ (X1) pour représenter l'emplacement d'un point de départ d'un des côtés parallèles du trapèze, lesdites données d'adresse de point de départ comprenant une partie entière et une partie fractionnaire associées;
b) stocker (52) des données d'adresse de point de fin (X2) pour représenter l'emplacement d'un point de fin dudit côté parallèle du trapèze, ladite adresse de point de fin comprenant une partie entière et une partie fractionnaire associées;
c) stocker (51) des données de pente de point de départ (DX1) représentant la distance dans une direction parallèle auxdits côtés parallèles dudit point de départ à un point de départ dans une rangée de pixels adjacente du trapèze, lesdites données de pente de point de départ comprenant une partie entière et une partie fractionnaire associées;
d) stocker (53) des données de pente de point de fin (DX2) représentant la distance dans une direction parallèle auxdits côtés parallèles dudit point de fin à un point de fin dans ladite rangée de pixels adjacente du trapèze, les données de pente de point de fin comprenant une partie entière et une partie fractionnaire associées;
e) engendrer (57) dans le système de traitement graphique une instruction qui crée une valeur de pixel pour des emplacements de pixels entre ledit point de départ et ledit point de fin;
f) utiliser ladite valeur de pixel pour remplir des pixels entre ledit point de départ et ledit point de fin;
g) déterminer (54) un point de départ pour une rangée de pixels suivante sous la commande de ladite instruction engendrée, les données d'adresses de point de départ de la rangée de pixels précédente et lesdites données de pente de point de départ (DX1);
h) déterminer (55) un point de fin pour ladite rangée de pixels suivante sous la commande desdites instructions engendrées, les données d'adresse de point de fin de la rangée de pixels précédente et lesdites données de pente de point de fin (DX2);
i) utiliser ladite valeur de pixel pour remplir les pixels entre les points de départ et de fin de ladite rangée de pixels suivante; et
j) répéter (56) les étapes (g) à (i) jusqu'à ce que la génération du trapèze soit terminée.

2. Procédé suivant la revendication 1, dans lequel ledit point de départ et ledit point de fin sont disposés dans une rangée de pixels définie par une valeur (Y).

3. Procédé suivant la revendication 2, dans lequel l'étape (g) comprend l'étape de chargement par ladite valeur de (Y), et dans lequel l'étape (j) comporte en outre l'étape de répétition des étapes (g) à (i) en fonction d'une valeur de boucle donnée jusqu'à ce que la génération du trapèze soit terminée.

4. Procédé suivant la revendication 3, dans lequel l'étape (g) comporte en outre l'étape de commande de ladite valeur de boucle utilisant lesdites instructions.

5. Procédé suivant l'une quelconque des revendications 1 à 4, dans lequel l'étape (g) de détermination du point de départ comprend l'étape d'incrémentation de la position du point de départ par ladite rangée de pixels suivante dans une direction parallèle auxdits côtés parallèles dudit trapèze seulement lorsque la partie entière desdites données d'adresse de point de départ change.

6. Procédé suivant l'une quelconque des revendications 1 à 5, dans lequel l'étape (h) de détermination du point de fin, comprend l'étape d'incrémentation de la position du point de fin pour ladite rangée de pixels suivante dans une direction parallèle auxdits côtés parallèles dudit trapèze, seulement lorsque ladite partie entière de données d'adresse de point de fin change.

7. Processeur destiné à être utilisé dans un système de traitement graphique, caractérisé en ce qu'il comprend :
- plusieurs registres;
- une mémoire contenant des instructions codées pour commander les étapes dudit processeur, lesdites instructions codées actionnables pour déplacer des données dans et hors desdits registres, pendant l'exécution de l'une quelconque desdites instructions codées, et
- un circuit actionnable en réponse à l'instruction d'un ensemble particulier desdites instructions codées à la réception, d'une seule instruction pour assurer le calcul de remplissage d'un trapèze lorsque certains résultats intermédiaires sont stockés dans lesdits registres et non communiqués du processeur, ledit circuit comprenant en outre :
- un premier registre pour stocker une adresse (X1) d'un point de départ (30,41) de l'un des côtés parallèles dudit trapèze dans un format qui comprend une partie entière et une partie fractionnaire;
- un second registre pour stocker une adresse (X2), d'un point de fin (31,42) dudit côté parallèle dans un format qui comprend une partie entière et une partie fractionnaire;
- des registres de pente pour stocker les premières données de pente (DX1) représentant la distance dans une direction parallèle auxdits côtés parallèles dudit point de départ à un point de départ suivant dans une rangée de pixels et des secondes données de pente (DX2) représentant la distance dans une direction parallèle auxdits côtés parallèles dudit point de fin à un point de fin adjacent dans ladite rangée de pixels adjacente, lesdites première et seconde données de pente étant stockées dans un format qui comprend une partie entière et une partie fractionnaire;
- un circuit (54,55) pour successivement calculer chaque point de départ suivant et chaque point de fin suivant pour chaque rangée de pixels adjacente dudit trapèze basée sur lesdites premières données de pente et lesdites secondes données de pente dans lesdits registres de pente et sur des données successivement mises à jour dans ledit premier registre et ledit second registre; et
- un circuit pour présenter ledit chaque point de départ suivant et ledit chaque point de fin suivant audit processeur, de manière à créer et à remplir ledit trapèze.

8. Processeur suivant la revendication 7, comprenant un circuit de commande de boucle, ledit circuit de commande de boucle comprenant un compteur et dans lequel ledit circuit de calcul est commandé par ledit circuit de commande de boucle.

9. Processeur suivant la revendication 7 ou 8, dans lequel ledit circuit de calcul incrémente la position dans une direction parallèle auxdits côtés parallèles de chaque point de départ ou de fin suivant, seulement lorsque la partie entière du point de départ ou de fin respectif suivant change.

10. Processeur suivant l'une quelconque des revendications 7 à 9, comprenant un circuit pour créer une valeur de pixel pour des emplacements de pixels entre ledit point de départ et ledit point de fin de chaque rangée de pixels dans le trapèze.
